# EUROPEAN PATENT APPLICATION

(11) **EP 2 580 952 A1**
(43) Date of publication of application: **17.04.2013**
(21) Application number: 12186810.3
(22) Date of filing: 01.10.2012
(51) Int. Cl.: A01C 23/02

(54) **A flow monitor and agricultural implement with such**

(30) Priority: 14.10.2011 US 201113273275
(71) Applicant: DEERE & COMPANY, Moline, Illinois 61265-8098 (US)
(72) Inventor: Chaney, Nathan A, Ottumwa, Iowa 52501 (US)
(74) Representative: Holst, Sönke

(57) **Abstract**

A flow monitor (65) for monitoring application of a matter through a first flow path (110) having a first outlet (130) and a second flow path (115) having a second outlet (135) is described. In order to provide a flow monitor which is less costly and complex with regard to existing flow monitors it is proposed to provide a first temperature sensing device (70) positioned adjacent the first outlet (130) and producing a first temperature signal, a second temperature sensing device (75) positioned adjacent the second outlet (135) and producing a second temperature signal; and a signaling device (95), remote from the first outlet (130) and remote from the second outlet (135), the signaling device (95) is activated when the first temperature signal differs from the second temperature signal by a predetermined value. Further an agricultural implement with above mentioned flow monitor is described.

## Description

The present disclosure generally relates to a flow monitor for monitoring application of a matter through a first flow path having a first outlet and a second flow path having a second outlet. The invention further relates to an agricultural implement with such flow monitor.

Flow monitors can be used to monitor flow of a chemical through a pipe to indicate if the pipe becomes obstructed or blocked. For example, the flow of a chemical being applied to soil by an agricultural implement can become reduced or stopped if distribution lines become clogged or broken. In order to monitor the flow of chemical application by an agricultural implement, agricultural implements commonly include control valves with flow sensors positioned upstream of the distribution lines. U.S. Patent No. 4,458,609 discloses such a device including a heat exchanger that maintains anhydrous ammonia in a liquid state so that a flow control valve can accurately control the flow rate of ammonia to a manifold. Separate lines connected to the manifold downstream of the control valve distribute the ammonia to nozzles associated with earthworking tools to place the ammonia into the soil.

Other flow monitors include pressure gauges positioned upstream of distribution lines. U.S. Patent Publication No. 2010/0073473 discloses a pressure gauge that is used to monitor pressure at a distributor. A camera is positioned to view the pressure gauge and to transmit and image of the pressure gauge to a monitor in an operator cab of a tractor pulling the implement. Separate distribution lines connected to the distributor disperse the ammonia to nozzles associated with earthworking tools to place the ammonia into the soil.

One object of the invention is to provide an alternative flow monitoring device for an agricultural implement in order to lower costs and complexity.

The object will be achieved by the teaching of the claims 1 and 9. Further advantageous embodiments are described within the accompanying claims.

Accordingly, a flow monitor of the above mentioned manner is provided with a first temperature sensing device positioned adjacent the first outlet and producing a first temperature signal, a second temperature sensing device is positioned adjacent the second outlet and producing a second temperature signal. The flow monitor further comprising a signaling device, remote from the first outlet and remote from the second outlet, the signaling device is activated when the first temperature signal differs from the second temperature signal by a predetermined value.

The flow monitor is for monitoring application of a matter through a first flow path having a first outlet and a second flow path having a second outlet. Such a flow monitor could be used in any type of spray device, mixing chamber, agricultural implement, chemical processing facility, etc. The matter could be a chemical such as anhydrous ammonia or any other liquid, solid, or gas. The flow monitor includes a first temperature sensing device positioned adjacent the first outlet. The first temperature sensing device may be a first thermocouple. The first temperature sensing device produces a first temperature signal. The first temperature signal may be a first wireless signal. A second temperature sensing device is positioned adjacent the second outlet. The second temperature sensing device may be a second thermocouple. The second temperature sensing device produces a second temperature signal. The second temperature signal may be a second wireless signal.

A signaling device that is remote from the first outlet and remote from the second outlet is activated when the first temperature signal differs from the second temperature signal by a predetermined value. The first temperature signal may be indicative of a first flow path matter temperature and the second temperature signal may be indicative of an ambient temperature. Alternatively, the second temperature signal may be indicative of a second flow path matter temperature. The signaling device may be a monitor for displaying a visual signal. The signaling device or monitor may produce an audible signal. Alternatively, the signaling device may be a computer for displaying a visual signal. The computer may receive the first and second wireless signals. The computer may produce an audible or vibratory signal. The predetermined value may depend upon the matter, an initial temperature of the matter, and the ambient temperature among other things.

In another embodiment, an agricultural implement for delivering a matter to a soil is disclosed. The agricultural implement includes a coupling mechanism for coupling to a vehicle. A frame is coupled to the coupling mechanism and extends from the coupling mechanism. The frame is adapted to be pulled by the vehicle in a direction of travel. A plurality of wheel assemblies is coupled to the frame. The wheel assemblies support the frame above a surface. A first, second, and third ground engaging component is coupled to the frame for delivering the matter to the soil. The agricultural implement includes a flow monitor. The flow monitor has a first temperature sensing device positioned adjacent the first ground engaging component. The first temperature sensing device may be a first thermocouple. The first temperature sensing device produces a first temperature signal. A second temperature sensing device is positioned adjacent the second ground engaging component. The second temperature sensing device may be a second thermocouple. The second temperature sensing device produces a second temperature signal. A third temperature sensing device is positioned adjacent the third ground engaging component. The third temperature sensing device may be a third thermocouple. The third temperature sensing device produces a third temperature signal. The flow monitor has a display device that is remote from the first, second, and third ground engaging components. The display device may display the first, second, and third temperature signals. The display device includes a signaling device that is activated when the first, second, and third temperature signals differ by a predetermined value. The display device or signaling device may be a monitor coupled to the vehicle. The monitor may display a first visual signal, produce a first audible signal, or both. Alternatively, the display device may be a computer. The computer may display a second visual signal, produce a second audible signal, or both. The signaling device may display a third visual signal, produce a third audible signal, or both. The predetermined value may depend upon the matter, an initial temperature of the matter, and an ambient temperature among other things.

In yet another embodiment, a flow monitor is disclosed. The flow monitor is for monitoring application of a matter by an agricultural implement adapted to be pulled by a vehicle. The agricultural implement includes a flow path having an outlet. The flow monitor includes a first temperature sensing device positioned adjacent the outlet that produces a matter temperature signal. The first temperature sensing device may be a first thermocouple. A second temperature sensing device is coupled to one of the agricultural implement and the vehicle and produces an ambient temperature signal. The second temperature sensing device may be a second thermocouple. A signaling device that is remote from the outlet is activated when the matter temperature signal differs from the ambient temperature signal by a predetermined value. The predetermined value may depend upon the matter, an initial temperature of the matter, and the ambient temperature among other things.

FIG. 1 is a perspective view of an agricultural implement according to one embodiment.

FIG. 2 is a perspective view of an agricultural implement according to another embodiment.

Before any embodiments are explained in detail, it is to be understood that the disclosure is not limited in its application to the details of construction and the arrangement of components set forth in the following description or illustrated in the following drawings. The disclosure is capable of other embodiments and of being practiced or of being carried out in various ways.

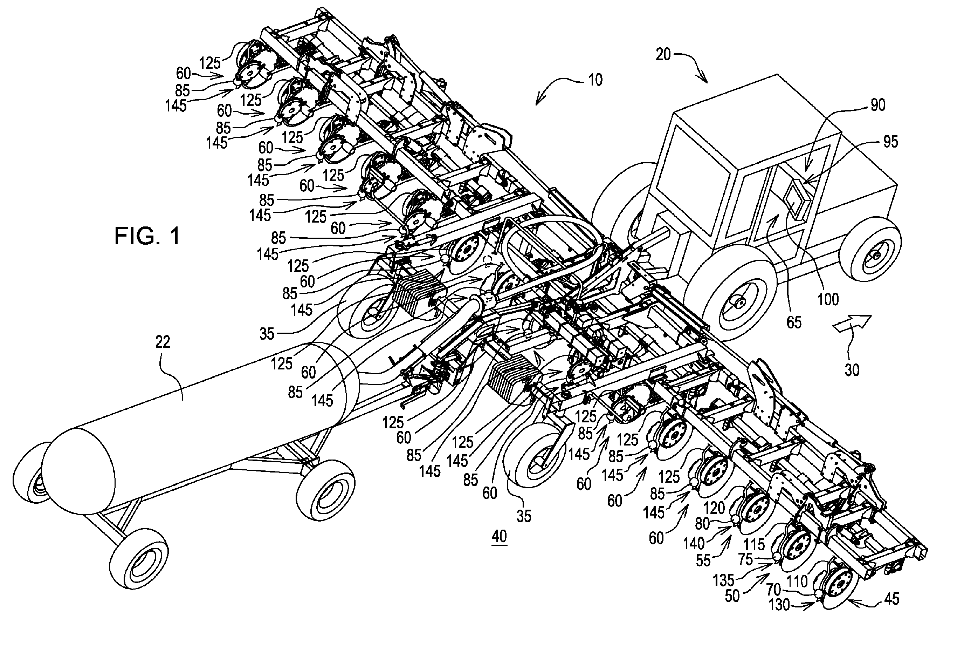

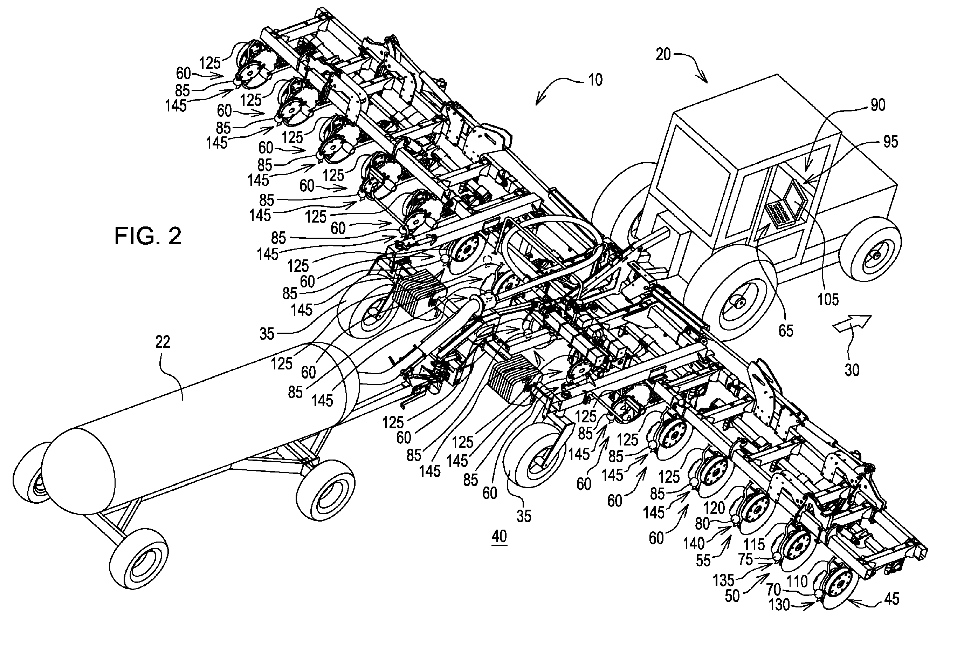

FIGS. 1 and 2 illustrate an agricultural implement 10 for applying a matter (e.g., anhydrous ammonia) to a soil (not shown). The illustrated agricultural implement 10 includes a coupling mechanism 15 for coupling to a vehicle 20 and a tank 22.

A frame 25 is coupled to the coupling mechanism 15. The frame 25 extends rearwardly from the coupling mechanism 15 in a direction opposite of a direction of travel 30. A plurality of wheel assemblies 35 are coupled to the frame 25. The wheel assemblies 35 support the frame 25 above a surface 40.

A first ground engaging component 45 is coupled to the frame 25. A second ground engaging component 50 is coupled to the frame 25. A third ground engaging component 55 is coupled to the frame 25. Additional ground engaging components 60 are also coupled to the frame 25.

The illustrated agricultural implement 10 includes a flow monitor 65. The illustrated flow monitor 65 includes a first temperature sensing device 70 positioned adjacent the first ground engaging component 45. A second temperature sensing device 75 is positioned adjacent the second ground engaging component 50. A third temperature sensing device 80 is positioned adjacent the third ground engaging component 55. Additional temperature sensing devices 85 are positioned adjacent the additional ground engaging components 60. The flow monitor 65 includes a display device 90 having a signaling device 95. Referring to FIG. 1, the display device 90 or signaling device 95 may be a monitor 100 coupled to the vehicle 20. Alternatively, the display device 90 may be a computer 105 (FIG. 2).

In operation, the coupling mechanism 15 is coupled to the vehicle 20. While the vehicle 20 moves in the direction of travel 30, the first, second, third, and additional ground engaging components (45, 50, 55, 60) apply the matter to the soil through a first, second, third, and additional flow paths (110, 115, 120, 125) having a first, second, third, and additional outlets (130, 135, 140, 145). The first, second, third, and additional temperature sensing devices (70, 75, 80, 85) produce a first, second, third, and additional temperature signals (not shown). The first, second, third, and additional temperature signals are received and displayed by the display device 90. The first, second, third, and additional temperature signals may be a first, second, third, and additional wireless signal (not shown). The display device 90 may be the computer 105 that receives the first, second, third, and additional wireless signals. The display device 90 is activated when the first, second, third, and additional temperature signals differ by a predetermined value. Activation of the signaling device 95 may produce a visual signal (not shown) that is displayed on the display device 90, or an audible signal (not shown), or both.

While the disclosure has been illustrated and described in detail in the drawinqs and foregoing description, such illustration and description is to be considered as exemplary and not restrictive in character, it being understood that illustrative embodiments have been shown and described and that all changes and modifications that come within the spirit of the disclosure are desired to be protected. It will be noted that alternative embodiments of the present disclosure may not include all of the features described yet still benefit from at least some of the advantages of such features. Those of ordinary skill in the art may readily devise their own implementations that incorporate one or more of the features of the present disclosure and fall within the spirit and scope of the present invention as defined by the appended claims.

## Claims

1. A flow monitor (65) for monitoring application of a matter through a first flow path (110) having a first outlet (130) and a second flow path (115) having a second outlet (135), **characterized in** further comprising:
a first temperature sensing device (70) positioned adjacent the first outlet (130) and producing a first temperature signal;
a second temperature sensing device (75) positioned adjacent the second outlet (135) and producing a second temperature signal; and
a signaling device (95), remote from the first outlet (130) and remote from the second outlet (135), the signaling device (95) is activated when the first temperature signal differs from the second temperature signal by a predetermined value.

2. The flow monitor (65) of claim 1, wherein the first temperature signal is indicative of a first flow path (110) matter temperature and the second temperature signal is indicative of an ambient temperature.

3. The flow monitor (65) of claim 1 or 2, wherein the first temperature signal is indicative of a first flow path (110) matter temperature and the second temperature signal is indicative of a second flow path (115) matter temperature.

4. The flow monitor (65) of one of the claims 1 to 3, wherein the signaling device (95) is a monitor (100) for displaying a visual signal.

5. The flow monitor (65) of one of the claims 1 to 4, wherein the signaling device (95) produces an audible signal.

6. The flow monitor (65) of one of the claims 1 to 5, wherein the signaling device (95) is a computer (105) for displaying a visual signal and the first temperature signal is a first wireless signal received by the computer (105) and the second temperature signal is a second wireless signal received by the computer (105).

7. The flow monitor (65) of one of the claims 1 to 6, wherein the matter is anhydrous ammonia.

8. The flow monitor (65) of one of the claims 1 to 7, wherein the first temperature sensing device (70) is a first thermocouple and the second temperature sensing device (75) is a second thermocouple.

9. An agricultural implement (10) adapted to be pulled by a vehicle (20), the agricultural implement (10) comprising a flow monitor (65) according to one of the claims 1 to 8.

10. An agricultural implement (10) according to claim 9, further comprising, a first ground engaging component (45) for delivering the matter to the soil, and a second ground engaging component (50) for delivering the matter to the soil, wherein the first temperature sensing device (70) is positioned adjacent the first ground engaging component (45) and the second temperature sensing device (75) is positioned adjacent the second ground engaging component (50).

11. An agricultural implement (10) of claim 9 or 10, further comprising a coupling mechanism (15) for coupling to a vehicle (20);
a frame (25) coupled to the coupling mechanism (15) and extending from the coupling mechanism (15) and adapted to be pulled by the vehicle (20) in a direction of travel (30);
a plurality of wheel assemblies (35) coupled to the frame (25), the wheel assemblies (35) supporting the frame (25) above a surface (40);
and a display device (90), remote from the first ground engaging component (45) and remote from the second ground engaging component (50), the display device (90) displaying the first temperature signal and the second temperature signal;
wherein the display device (90) comprises the signaling device (95) that is activated when the first temperature signal and the second temperature signal differ by a predetermined value.

12. The agricultural implement (10) of claim 11, wherein activation of the signaling device (95) produces a visual signal displayed on the display device (90).

13. The agricultural implement (10) of claim 11 or 12, further comprising a third ground engaging component (55) coupled to the frame (25) for delivering the matter to the soil and a third temperature sensing device (80) positioned adjacent the third ground engaging component (55) and producing a third temperature signal, the display device (90) is activated when the first temperature signal, the second temperature signal, and the third temperature signal differ by a predetermined value.

14. The agricultural implement (10) of claim 13, wherein the first temperature sensing device (70) is a first thermocouple, the second temperature sensing device (75) is a second thermocouple, and the third temperature sensing device (80) is a third thermocouple.
